# EUROPÄISCHE PATENTSCHRIFT

(11) **EP 1 848 528 B1**
(45) Veröffentlichungstag und Bekanntmachung des Hinweises auf die Patenterteilung: **22.06.2011**
(21) Anmeldenummer: 06708300.6
(22) Anmeldetag: 16.02.2006
(51) Int. Cl.: B01J 19/12, B01J 19/24, B01J 19/00, C02F 1/30, C02F 1/32

(54) **FOTOREAKTOR**
PHOTOREACTOR
PHOTOREACTEUR

(30) Priorität: 24.01.2006 WO PCT/EP2006/050400; 19.02.2005 DE 102005007771
(43) Veröffentlichungstag der Anmeldung: 31.10.2007
(73) Patentinhaber: Deutsches Zentrum für Luft- und Raumfahrt e.V., 51147 Köln (DE); Hirschmann Laborgeräte GmbH & Co. KG, 74246 Eberstadt (DE)
(72) Erfinder: SATTLER, Christian, 53225 Bonn (DE); JUNG, Christian, 53844 Troisdorf (DE); BIGUS, Hans-Jürgen, 74246 Eberstadt (DE)
(74) Vertreter: von Kreisler Selting Werner
(86) Internationale Anmeldenummer: PCT/EP2006/060006
(87) Internationale Veröffentlichungsnummer: WO 2006/087353

(56) Entgegenhaltungen:
- EP-A- 0 936 188
- WO-A-2004/031078
- CH-A- 266 090
- GB-A- 515 669
- LOVEGROVE K ET AL: "Endothermic reactors for an ammonia based thermo-chemical solar energy storage and transport system" SOLAR ENERGY, PERGAMON PRESS. OXFORD, GB, Bd. 56, Nr. 4, April 1996 (1996-04), Seiten 361-371, XP004007131 ISSN: 0038-092X

## Beschreibung

Die Erfindung betrifft einen Fotoreaktor mit strahlungsdurchlässigen Rohren, die von einem Reaktionsmedium durchströmbar sind und von außen mit Licht bestrahlt werden, wobei die Rohre von einer Einlasskammer abgehen, welche einen Fluideinlass aufweist.

Zur Detoxifizierung bzw. Entkeimung von durch Schadstoffe oder Mikroorganismen kontaminierten Fluiden werden fotochemische und fotobiologische Verfahren entwickelt. Bei allen diesen Verfahren werden durch photonische Anregung sauerstoffreiche Spezies wie Singulett-Sauerstoff, Hydroxyl- oder andere sauerstoffhaltige Radikale oder andere stark oxidierend wirkende Intermediate gebildet, die zum Abbau bzw. Inaktivierung der Schadstoffe bzw. Mikroorganismen führen.

Beispiele hierfür sind die photonische Aktivierung von Reagenzien wie beispielsweise Wasserstoffperoxid oder Caroat oder photokatalytische Verfahren wie die Halbleiterphotokatalyse beispielsweise mit Titandioxid oder die lichtverstärkte Fenton-Reaktion (Photo-Fenton-Reaktion).

Zur Durchführung werden neben elektrischen Lichtquellen, wie Gasentladungslampen, Glühlampen, fluoreszierende Lampen, Leuchtdioden oder Röhren, Excimerstrahler und Laser, auch die Sonne eingesetzt. Die nicht solaren Lichtquellen haben bei moderaten Investitionskosten jedoch geringe Wirkungsgrade, was hohe Kosten sowohl für die erforderliche elektrische Energie und für die Kühlung nach sich zieht. Zudem sind die Leuchtmittel vergleichsweise teuer und zudem kurzlebig. Durch die im Betrieb sich einstellenden hohen Leuchtmitteltemperaturen, hohen elektrischen Spannungen und Leistungen sowie die häufig eingesetzten toxischen Bestandteile, wie Quecksilberdampf, sind zudem hohe Aufwendungen für Sicherheitstechnik erforderlich.

Neben der besseren Nachhaltigkeit der letztgenannten Lichtquelle können sich aufgrund der im Vergleich kleineren Betriebskosten solarer Anlagen neben ökologischen auch finanzielle Anreize für den Einsatz des Sonnenlichtes identifizieren.

Zur Nutzung der Sonne als Lichtquelle für die vorgenannten Anwendungsfelder wurden verschiedene Receiver-Reaktor-Konzepte vorgestellt.

So ist in DE 198 44 037 A1 ein Flachbett-Receiver-Reaktor für solar-foto- und solar-thermochemische Synthesen beschrieben. Insbesondere bei hohen Konzentrationen oder großen Extinktionskoeffizienten der gelösten Substanzen oder bei stark getrübten Fluiden, wie Emulsionen oder Suspensionen, ist der Einsatz solcher Reaktoren mit vergleichsweise dicken Fluidschichten nachteilig. Die Eindringtiefe des Lichtes in die Reaktionsmischung fällt hier durch Lichtabsorption gemäß dem Lambert-Beerschen Gesetz sowie durch Lichtstreuung an den Partikeln bzw. Tropfen sehr gering aus.

Unter anderem zur Lösung dieses Problems wurden Fallfilmreaktoren erprobt (D. Bahnemann, M. Meyer, U. Siemon, D. Mencke, A Self-Sufficient PV Powered Solar Detoxification Reaktor for Polluted Waters, Proc. Int. Sol. Energy Conf. Solar Engineering - 1997, April 27-30, 1997, ASME, Washington D. C., 261-267: B. Braun, J. Ortner, K.-H. Funken, M. Schäfer, C. Schmitz, G. Horneck, M. Fasdni, Dye-Sensitized Solar Detoxification and Disinfection of Contaminated Water, Proc. 8th Int. Symp. Solar Thermal Concentrating Technologies, Vol. 3, C.F. Müller Verlag, Heidelberg (1997) 1391-1401). Nachteilig bei den Fallfilmen ist die Erfordernis großer Abdeckungen, die nur aufwändig zu fertigen sind. Darüber hinaus wird sehr viel Energie zum wiederholten Umpumpen der Reaktionsmischung über die Fallfilmfläche aufgewendet. Der atmosphärisch offene Betrieb von Fallfilmen wurde demonstriert, jedoch werden hier niedrigsiedende Substanzen unkontrolliert in die Umwelt entlassen.

Nicht lichtkonzentrierende Stegmehrfachplatten-Reaktoren, insbesondere Stegdoppelplatten-Reaktoren, die aus extrudierten lichtdurchlässigen Kunststoffen bestehen (EP 0 738 686 A1) und so genannte CPC-Reaktoren (zusammengesetzte Parabolreaktoren) (beispielsweise J. I. Ajona, A. Vidal, The Use of CPC Collectors for Detoxification of Contaminated Water: Design, Construction and Preliminary Results, Solar Energy 68 (2000) 109-120), wurden für die solare Detoxifizierung kontaminierter Abwässer entwickelt und erprobt.

Diese Reaktorsysteme zeigen ähnliche Effizienzen (R. Dillert, R. Goslich, J. Dzengel, H.-W. Schuhmacher, D. Bahnemann, Field Studies of Solar Water Detoxification, Proc. 1st User Workshop Training and Mobility of Researchers Programme at Plataforma Solar de Almeria, Nov. 18-19, 1997, Almeria, Spain, Ser, Ponencias, Madrid (1998) 31-40). Es wurde jedoch gefunden, dass die Stegplatten-Reaktoren in erheblichem Maß zum Fouling neigen und ihre Effizienz im Vergleich zu CPC-Reaktoren rasch abnimmt. CPC-Reaktoren weisen den Nachteil auf, einen komplex geformten Reflektor zu erfordern. Die Investitionskosten sind für diese Reaktortechnik daher vergleichsweise hoch. Zudem können die Reflektoren optischer oder mechanischer Degradation unterliegen.

Linien- und punktfokussierende Konzentratoren wurden ebenfalls für die solare Detoxifizierung eingesetzt (DE 434 41 63 A1). Diese nutzen jedoch nur die Direktstrahlung und nicht die besonders UV-Licht reiche Diffusstrahlung der Sonne. Durch die Lichtkonzentration werden zwar raschere Konzentrationsänderungen als mit nicht konzentriertem Sonnenlicht erzeugt, die reaktorbezogene solare Photonenausbeute ist jedoch vergleichsweise klein und die Behandlungskosten auch aufgrund der vergleichsweise hohen Investitionskosten dementsprechend groß.

Bei einem Fotoreaktor mit transparenten Rohren, wie er in DE 100 09 060 A1 der Anmelderin beschrieben ist, wurden ohne die Kombination mit Reflektoren ähnliche Abbauraten wie mit CPC-Kollektoren erzielt. Nachteilig ist auch hier das Verhältnis von Apertur zur Größe der inneren Oberfläche der Rohre. Durch entsprechende Vergrößerung kann die Reaktor-bezogene Photonenausbeute weiter gesteigert werden.

Der Nachteil des Standes der Technik besteht generell in der zu geringen Reaktor-bezogenen solaren Photonenausbeute. Insbesondere die Streuverluste bei der Verwendung von Suspensionen fein verteilter Photokatalysatoren beispielsweise auf Basis von Titandioxid führen bei den bisherigen Solarreaktorkonzepten zur ineffizienten Nutzung der eingestrahlten Photonen.

Die bekannten solaren Röhrenreaktoren sind darüber hinaus mit dem Nachteil behaftet, bei hoher Geschwindigkeit mit turbulenter Strömung betrieben zu werden, um das Absetzen von Trübstoffen bzw. suspendierten Fotokatalysatoren zu vermeiden.

Durch das Bewegen des gesamten Fluidstromes mit hoher Geschwindigkeit ist ein relativ großer Energieeinsatz zum Antrieb von Pumpen erforderlich. Müsste nur ein kleinerer Anteil des Fluides turbulent bewegt werden, wäre dies für die Wirtschaftlichkeit und die Ökobilanz einer solaren Fotoreaktoranlage vorteilhaft.

Ein Fotoreaktor nach US 4,456,512 A weist eine mit einem Fluideinlass versehene Einlasskammer auf, von der ein Bündel aus Kapillarrohren abgeht. Die Kapillarrohre führen durch einen Raum hindurch, in welchem ein Plasma erzeugt wird. Die Außenwand dieses Raumes ist gekühlt. In dem Reaktionsfluid, das die Kapillarrohre durchströmt, werden fotochemische Reaktionen ausgeführt.

Ein ähnlicher Fotoreaktor ist in US 3,554,887 beschrieben. Hierbei sind die Rohre mit einer Einlasskammer und einer Auslasskammer verbunden. Im Inneren der Rohrkonstruktion erstreckt sich eine Lichtquelle, die das für die Fotoreaktion benötigte Licht erzeugt.

In WO 2004/031078 A1 ist eine Vorrichtung zur Strahlungsbehandlung von Fluiden beschrieben. Hierbei wird das Fluid durch mehrere Rohrbündel geleitet, die jeweils mit einer Einlasskammer und einer Auslasskammer verbunden sind. Zum Reinigen der Rohrbündel weist die Einlasskammer in axialer Ausrichtung mit jedem der Rohre eine Öffnung auf, durch die eine Reinigungsstange mit Reinigungskopf hindurch gesteckt werden kann. Im Mittelbereich der Einlasskammer befindet sich eine Stützplatte, die ebenfalls Öffnungen für den Durchtritt der Reinigungsstangen aufweist.

Der Erfindung liegt die Aufgabe zugrunde, einen Fotoreaktor zur Durchführung fotochemische oder fotobiologischer Reaktionen wie Synthesen, Reinigungs-, Desinfektions- und Behandlungsverfahren zu schaffen, dessen Effektivität erhöht - ist.

Die Lösung dieser Aufgabe erfolgt mit den im Patentanspruch 1 angegebenen Merkmalen. Hiernach enthält die Einlasskammer einen Strömungsverteiler, der das Reaktionsmedium von dem Fluideinlass auf die Rohre verteilt. Der Strömungsverteiler ist eine Abschottung mit Löchern. Die Löcher sind versetzt zu den Einlassenden der Rohre ausgerichtet.

Durch den Strömungsverteiler wird erreicht, dass die Einlasskammer ein geringeres Volumen haben kann. Dadurch wird der Anteil des nicht bestrahlten Volumens des Reaktionsmediums verringert. Aufgrund des geringen Anteils nicht bestrahlten und damit bezüglich reiner Photoreaktionen auch nicht reagierenden Fluidanteiles führen die lichtausgelösten Prozesse zu vergleichsweise schnelleren stofflichen Änderungen im Gesamtfluid bzw. zu rascheren Konzentrationsänderungen. Infolge des geringen Volumens der Einlasskammer und der daran anschließenden Rohre ist das Volumen des Fotoreaktors insgesamt gering. Die gleichmäßige Verteilung des Reaktionsmediums auf die Rohre bewirkt eine hohe Effektivität des Fotoreaktors, da das Fluidvolumen verkleinert ist und die Intensität der Behandlung erhöht wird. Durch den Strömungsverteiler wird auch die Strömungsgeschwindigkeit in den Rohren verlangsamt. Eine etwaige Beschichtung der Rohrinnenwand mit einem Katalysator oder einem anderen Material wird wegen der verringerten Strömungsgeschwindigkeit weniger abgewaschen.

Der Strömungsverteiler kann auch als statischer Mischer ausgeführt sein, um Hilfsmittel wie Photokatalysatoren, Luft, Sauerstoff, Wasserstoffperoxid oder andere Oxidationsmittel gleichmäßig auf die Rohre zu verteilen.

Gemäß einer bevorzugten Weiterbildung der Erfindung ist vorgesehen, dass die Rohre Kapillarrohre sind und eine Wandstärke von mindestens 10% des Innendurchmessers aufweisen. Die Kapillarrohre haben einen Innendurchmesser von weniger als 10 mm. Durch den Einsatz von Kapillarrohren wird ebenfalls das Volumen des Reaktors bzw. des Reaktorkreislaufes verringert.

Durch den Einsatz von fluiddurchströmten Kapillarrohren bzw. Kapillarrohrbündeln treffen Teile des eingestrahlten Lichts nicht direkt in der gleichen Ebene des Kollektors auf das darin strömende Fluid. Ursache ist das im Vergleich zu den üblichen solaren Fotoreaktoren mit transparenten Rohren stark vergrößerte Verhältnis von Glasoberfläche zu dem Rohrinnen- bzw. Fluidvolumen. Die im Vergleich zum Stand der Technik pro Kollektorfläche und Kollektorvolumen zahlreicheren und stärkeren Glaswände der Kapillarrohre wirken daher in höherem Maße als Lichtleiter in tiefere Kollektorschichten.

In den tieferen Kapillarschichten trifft das Licht auf das Fluid, das bei den Reaktoren gemäß des Standes der Technik nicht oder nur sehr schwach mit Licht in Wechselwirkung treten kann. Darüber hinaus wird das aus diesen tieferen Schichten zurück gestreute Licht von darüber liegenden Kapillaren durch rückseitige Bestrahlung aufgenommen. In der Summe wird durch diese Effekte das auf die Apertur eingestrahlte Licht bei dem Kapillarreceiver effizienter genutzt als bei den Receiver-Reaktoren im Stand der Technik.

Die Rückstreuverluste des eingestrahlten Lichtes sind dementsprechend geringer als bei einer Anordnung von gewöhnlich dimensionierten transparenten Röhren oder bei den CPC-Kollektoren und insbesondere geringer gegenüber der Bestrahlung einer Fluidfläche wie in einem Stegplattenkollektor oder einem Fallfilmreaktor.

Hierdurch wird es ermöglicht, dünne Fluidschichten zu erhalten, in denen höhere Photonenströme als in entsprechenden Volumenkompartimenten anderer Fotoreaktoren bei gleicher Einstrahlung auf die Apertur erzielt werden. Hierdurch werden schnellere Konzentrationsänderungen in den Fluiden durch den photonischen Effekt erzielt.

Insbesondere bei dem Einsatz fester Fotokatalysatoren und besonders bei dem Einsatz fein verteilter Fotokatalysatoren oder bei der Bestrahlung anderer trüber

Fluide, bei denen die Abschwächung des Lichtes innerhalb des Fluides außer durch das Lambert-Beersche Absorptionsverhalten in erheblichem Umfang durch Streuung bedingt wird, führen die oben beschriebenen Lichtwege in dem Kapillarreceiver zu erhöhter Effizienz.

Über die Vorteile bei der Bestrahlung von trüben Fluiden hinaus können auch Vorteile bei der Bestrahlung von klaren Fluiden mit reinem Lambert-Beerschen-Lichtabsorptionsverhalten erwartet werden. Durch die erheblich stärkere den Lichtstrahl aufweitende Wirkung der zahlreicheren und im Vergleich zu den zum Stand der Technik zählenden transparenten Glasrohrreaktoren stärker gekrümmten Kapillarrohre wird das Fluidvolumen bei vergleichbarer Einstrahlung mit geringeren Photonenströmen belichtet. Da viele photonisch ausgelöste Reaktionen bei höheren Photonenströmen beispielsweise durch Massentransferlimits ineffizienter werden, sind Steigerungen der Photonenausbeuten auch bei klaren Fluiden möglich.

Die Verwendung von Kapillarrohren ermöglicht eine größere innere Oberfläche des Reaktors.

Durch Auftragen photokatalytisch aktiver Schichten auf die Innenseite der Kapillaren kann pro Apertur mehr Katalysatorfläche als bei Reaktoren im Stand der Technik aufgetragen werden. Zudem kann der Reaktor mit kleineren Fließgeschwindigkeiten betrieben werden, so dass weniger bzw. langsamerer oder kein Beschichtungsabrieb als bei beschichteten Reaktoren im Stand der Technik erfolgt. Durch die Kombination von Strömungsverteiler und Kapillarbündel wird der hierzu erforderliche Ausgleich der Strömungsgeschwindigkeiten geschaffen.

Durch die Verwendung von Kapillaren kann der Reaktor im Gegensatz zu Glasrohrreaktoren im Stand der Technik mit Druck beaufschlagt werden, ohne dass besonders große Wandstärken erforderlich wären.

Durch die Erhöhung des Sauerstoffpartialdrucks mittels Druckbeaufschlagung (mit Luft oder Sauerstoff) kann die Konzentration gelösten Sauerstoffs in dem zu behandelnden Wasser erhöht werden (gemäß Henrys Gesetz). Im Wasser gelöste Schadstoffe werden dadurch photokatalytisch deutlich schneller abgebaut als bei Normaldruck.

Ein Kapillarreceiver lässt sich daher im Gegensatz zu Glasrohrreceivern im Stand der Technik durch eine Druckbeaufschlagung mit Sauerstoff bzw. Luft deutlich effizienter betreiben. Dabei werden Sauerstoffdrucke von 1 - 20 bar bzw. vorzugsweise 5-15 bar eingesetzt.

Durch die Kombination mit dem Strömungsverteiler, der die Strömungsgeschwindigkeiten in den Rohren des Reaktors ausgleicht, lassen sich mit einem druckbeaufschlagten Kapillarreceiver daher besonders große stoffliche Änderungen bei einfachem Durchlauf des Abwassers durch den Reaktor erzielen.

Der Begriff "Kapillarrohr" umfasst im Rahmen der vorliegenden Erfindung Rohre mit einem Innendurchmesser von weniger als 10 mm und mit einer Wandstärke, die vorzugsweise mindestens 10% des Innendurchmessers beträgt. Solche Kapillarrohre ermöglichen eine größere innere Oberfläche des Reaktors im Verhältnis zum Flüssigkeitsvolumen. Die dickeren Glasrohrwände können als Lichtleiter fungieren.

Vorzugsweise sind die Kapillarrohre zu einem langgestreckten Rohrbündel vereinigt, das sich zwischen einer Einlasskammer und einer Auslasskammer erstreckt. Dabei entstehen zahlreiche dünne Fluidschichten, die effizient mit Licht versorgt werden. Die bei trüben Fluiden entstehende Streustrahlung wird von benachbarten Kapillarrohren eingefangen. Die zahlreichen dünnen Fluidschichten werden effizienter mit Licht versorgt. Die Kapillarrohre ermöglichen den Betrieb bei einem Überdruck von typischerweise mindestens 8-20 bar. Durch die Strahlaufweitung an den inneren Oberflächen werden kleinere Photonenströme zugeführt, die auch bei klaren Fluiden höhere Photonenausbeute erwarten lassen.

Der Innendurchmesser der Kapillarrohre beträgt bevorzugt 1-10 mm und insbesondere bevorzugt 1-5 mm. Die Wandstärke der Kapillarrohre beträgt bevorzugt 0,1 - 5 mm und besonders vorzugsweise 0,1 - 3 mm. Das Verhältnis von Außendurchmesser zu Innendurchmesser der Kapillarrohre beträgt zwischen 20:1 und 1:1.

Die Länge der Kapillarrohre beträgt vorzugsweise 10 - 250 cm, insbesondere 40 - 180 cm, sowie höchst vorzugsweise 100 - 150 cm.

Eine Betriebsweise sieht vor, dass die Kapillarrohre an ein turbulent durchströmtes Fluidzuführungssystem parallel angeschlossen werden und bei kleinerer Strömungsgeschwindigkeit bei laminarer bzw. annähernd laminarer Durchströmung das Fluid leiten. Dadurch wird der Druckabfall und dadurch auch der Energieaufwand für den Betrieb von Pumpen klein gehalten. Eine turbulente Durchmischung der Fluide wird in dem Zuführungssystem gewährleistet. Besonders vorteilhaft ist bei der Verwendung von Kapillarrohren über den bekannten Reaktorrohren mit großem Querschnitt, dass ein kleineres Fluidvolumen mit hohem Energieaufwand turbulent bewegt werden muss und dabei gemischt wird.

Eine Ausführungsform des Reaktors sieht vor, dass der Boden des Kapillarreceivers als Spiegel ausgeführt ist. Hierdurch wird die erforderliche Anzahl von Kapillarschichten zur Erzielung einer vollständigen Lichtabsorption verringert und darüber hinaus die Bestrahlung der Rückseiten der Kapillarrohre verstärkt. Die Gefahr des Fouling, insbesondere durch mikrobiellen Bewuchs, wird dadurch verkleinert.

Eine weitere Ausführungsform sieht vor, dass unterhalb der untersten Kapillarrohrschicht oder innerhalb der Kapillarrohrschicht Leuchtmittel wie Gasentladungslampen, Glühlampen, fluoreszierende Lampen oder Röhren, Leuchtdioden, Excimerstrahler oder auch Laser oder Lichtleiter zur Einkopplung von Strahlung aus dem Leuchtmittel oder von Sonnenlicht mit oder ohne die Kombination mit Diffusoren angebracht sind, um einen Hybridenbetrieb zu ermöglichen, also einen Betrieb wahlweise mit Solarenergie oder mit dem künstlichen Leuchtmittel.

Eine weitere Ausführungsform betrifft die Einbettung elektrischer Felder durch Elektroden zwischen den Kapillaren. Hierbei können Gleich- oder langsame Wechselfelder zum Einsatz kommen, um die photochemische Ladungstrennung in Halbleitermaterialien zu unterstützen. Die elektrischen Felder können vorzugsweise auch durch Einbringen von Elektroden in die Kapillaren oder durch Fertigung der Kapillaren aus einem transparenten Elektrodenmaterial oder durch äußere bzw. vorzugsweise innere Beschichtung der Kapillaren mit einem transparenten Elektrodenmaterial in Kombination mit einer in oder außerhalb der Kapillare lokalisierten Gegenelektrode erzeugt werden.

Eine weitere Kombination mit elektrischen Feldern kann durch Einbringen von Kathoden und Anoden in der Ein- und/oder der Auslasskammer erzielt werden. An den Elektroden können in situ Oxidationsmittel wie beispielsweise Wasserstoffperoxid durch kathodische Reduktion von Sauerstoff oder Chlorit durch anodische Oxidation von Chlorid erzeugt werden. Insbesondere kann der Strömungsverteiler als großflächige Elektrode ausgeführt werden und eine kleinflächige Gegenelektrode beispielsweise zwischen Strömungsverteiler und Kapillaren im Sinne einer quasi-geteilten elektrochemischen Zelle angeordnet werden. Hierdurch wird die präzise Dosierung und Verteilung der etwaig erforderlichen Oxidationsmittel in situ möglich.

Eine weitere Ausführungsform sieht vor, die zum Betrieb der Elektroden erforderliche Spannung durch Photovoltaik-Module unterhalb der Kapillaren im Bodenbereich des Reaktors zu gewinnen.

Eine Ausführungsform kann elastische Lochplatten enthalten, in die die Enden der Kapillaren gesteckt sind. Diese werden mit Platten gegen die Ein- und/oder die Auslasskammer gepresst, um somit eine Dichtfläche zwischen Kammern und Rohren zu erhalten.

Die Dichtung der Kapillaren kann auch durch Eingießen/Einschmelzen in einen geeigneten Kunststoffblock erfolgen, der wiederum mit oder ohne Dichtung in die Einlass- oder die Auslasskammer gepresst wird.

Im Folgenden werden unter Bezugnahme auf die Zeichnungen Ausführungsbeispiele der Erfindung näher erläutert.

Es zeigen:
- Fig.1: einen Längsschnitt durch eine erste Ausführungsform des Fotoreaktors,
- Fig. 2: einen Querschnitt entlang der Linie II-II von Fig. 1, und
- Fig. 3: einen schematischen Querschnitt durch eine zweite Ausführungsform.

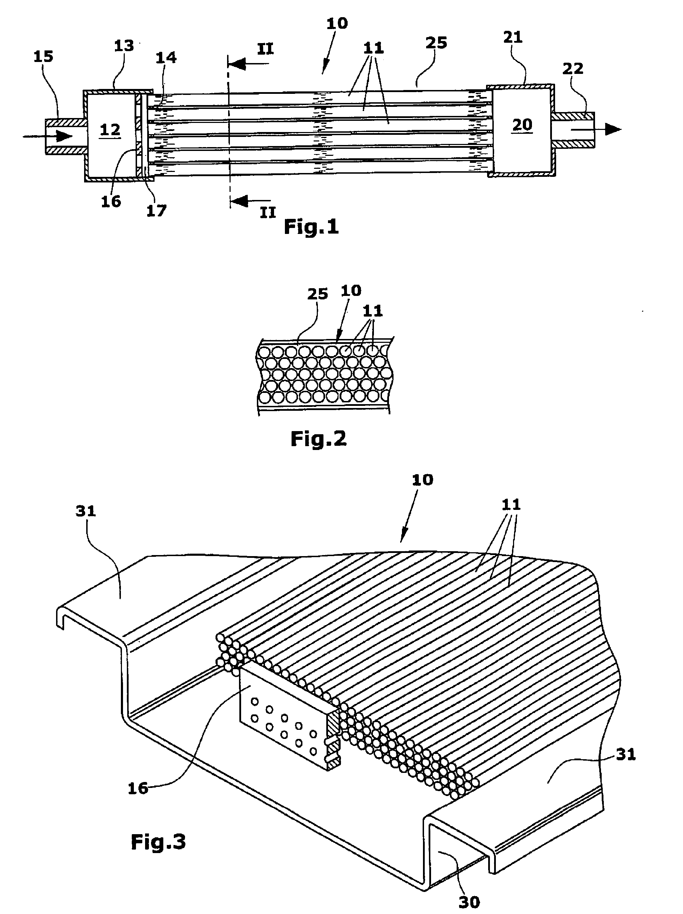

Der Fotoreaktor nach den Figuren 1 und 2 enthält ein Rohrbündel 10 aus zahlreichen langgestreckten parallelen Kapillarrohren 11 aus strahlungsdurchlässigem Material, insbesondere transparentem Material, wie Quarzglas. Die Darstellungen in den Zeichnungen sind nicht maßstäblich. Sie Die einen Enden der Kapillarrohre 11 sind an eine Einlasskammer 12 angeschlossen. Diese ist Bestandteil eines Gehäuses 13, das beispielsweise aus Kunststoff besteht. Die Enden des Kapillarrohrbündels sind in der Frontwand 14 des Gehäuses 13 vergossen, so dass die Frontwand 14 das Gehäuse 13 nach außen abdichtet, wobei die Einlasskammer 12 mit den Kapillarrohren in Fluidverbindung ist. Die Einlasskammer 12 weist einen Fluideinlass 15 auf. In der Einlasskammer 12 befindet sich ein Strömungsverteiler 16. Hierbei handelt es sich um eine Abschottung mit Löchern. Der Strömungsverteiler 16 bewirkt, dass in einer Vorkammer 17, an die die Rohrenden angrenzen, eine gleichmäßige Druckverteilung herrscht, so dass sämtliche Rohre gleichmäßig durchströmt werden. Dadurch wird verhindert, dass bei der Durchströmung diejenigen Rohre des Rohrbündels, die in der Mitte liegen, bevorzugt werden. Der Strömungsverteiler 16 bewirkt ferner, dass die in der Einlasskammer 12 herrschende turbulente Strömung in eine annähernd laminare Strömung überführt wird. Infolge des Strömungsverteilers 16 kann die Einlasskammer 12 kleiner ausgeführt werden. Hierdurch wird das nicht bestrahlte Volumen verringert. Infolge der langsameren Strömungsgeschwindigkeit wird eine Beschichtung, die an der Innenseite der Kapillarrohre 11 vorgesehen ist, nicht abgewaschen.

An dem entgegengesetzten Ende des Rohrbündels 10 befindet sich die Auslasskammer 20. Diese weist ebenfalls ein Gehäuse 21 auf, in dessen Frontseite die Enden der Rohre über eine Dichtung eingelassen sind. Das Fluid verlässt die Auslasskammer 20 durch den Fluidauslass 22.

Aus Fig. 2 ist ersichtlich, dass das Rohrbündel 10 aus mehreren Schichten aufeinander liegender Kapillarrohre 11 besteht. Im vorliegenden Fall haben die Kapillarrohre 11 runden Querschnitt und sie sind in aufeinander folgenden Schichten jeweils auf Lücke angeordnet. Die Rohre können auch jegliche andere Querschnittsform haben, beispielsweise quadratischen oder sechseckigen Querschnitt. Vorzugsweise sind die Rohre einander dicht benachbart, wobei sie sich berühren können.

Im Gebrauch des Fotoreaktors wird ein Fluid durch die Kapillarrohre des Rohrbündels 10 geleitet, während das Rohrbündel der Solarstrahlung oder einer künstlich erzeugten Strahlung ausgesetzt wird, die von außen auf die Rohre einwirkt, beispielsweise auf die Oberseite 25 des Rohrbündels 10. Die Strahlung wird dabei durch die Wände der Kapillarrohre gebrochen und durch das Reaktionsmedium dispergiert. Auf diese Weise verteilt sich die Strahlung in das Innere des Rohrbündels hinein. An der Unterseite des Rohrbündels kann sich ein (nicht dargestellter) Reflektor befinden.

Das Rohrbündel 10 mit Einlasskammer 12 und Auslasskammer 20 bildet ein Modul, das als Einheit gehandhabt und montiert werden kann. Damit besteht die Möglichkeit, zahlreiche Module nebeneinander zu montieren und somit eine beliebig erweiterbare Fotoreaktoranlage zu schaffen.

Bei dem Ausführungsbeispiel von Fig. 3 ist das Rohrbündel 10 in einer durchgehenden Wanne 30 angeordnet, die längslaufende Hakenprofile 31 aufweist, um an entsprechenden Halterungen eingehängt zu werden. Die Wanne 30 unterstützt die Kapillarrohre auf deren ganzer Länge. Der Wannenboden kann mit einer strahlungsreflektierenden Beschichtung versehen sein, ebenso wie die Seitenwände. Es besteht auch die Möglichkeit, die Wanne 30 aus transparentem Material herzustellen und sie von den Seiten oder vom Boden her zu beleuchten.

## Patentansprüche

1. Fotoreaktor mit strahlungsdurchlässigen Rohren (11), die von einem Reaktionsmediums durchströmbar sind und von außen mit Licht bestrahlt werden, wobei die Rohre (11) von einer Einlasskammer (12) abgehen, welche einen Fluideinlass (15) aufweist,
**dadurch gekennzeichnet,**
**dass** die Einlasskammer (12) einen Strömungsverteiler (16) enthält, der das Reaktionsmedium von dem Fluideinlass (15) auf die Rohre (11) verteilt, wobei der Strömungsverteiler (16) eine Abschottung mit Löchern ist und die Löcher versetzt zu den Einlassenden der Rohre (11) ausgerichtet sind.

2. Fotoreaktor nach Anspruch 1, **dadurch gekennzeichnet, dass** die Rohre (11) Kapillarrohre sind und eine Wandstärke von mindestens 10% des Innendurchmessers aufweisen.

3. Fotoreaktor nach Anspruch 1 oder 2, **dadurch gekennzeichnet, dass** die
Kapillarrohre (11) einen zwischen einer Einlasskammer (12) und einer Auslasskammer (20) verlaufendes langgestrecktes Rohrbündel (10) bilden.

4. Fotoreaktor nach eine der Ansprüche 1 bis 3, **dadurch gekennzeichnet, dass** die Rohre (11) innen mit einer photokatalytisch aktiven Beschichtung versehen sind.

5. Fotoreaktor nach einem der Ansprüche 1 bis 4, **dadurch gekennzeichnet, dass** in oder zwischen den Rohren Elektroden zur Erzeugung elektrischer Felder vorgesehen sind, wodurch die photochemische Ladungstrennung unterstützt wird.

6. Fotoreaktor nach einem der Ansprüche 1 bis 5, **dadurch gekennzeichnet, dass** die Einlasskammer (12) und/oder eine Auslasskammer (20) eine Elektrode als Saustoff redzierende Kathode und eine weitere Elektrode als Anode enthält.

7. Fotoreaktor nach einem der Ansprüche 1 bis 6, **dadurch gekennzeichnet, dass** die Einlasskammer (12) und/oder eine Auslasskammer (20) eine Elektrode als Chlorid oxidierende Anode und eine weitere Elektrode als Kathode enthält.

8. Fotoreaktor nach Anspruch 6 oder 7, **dadurch gekennzeichnet, dass** der Strömungsverteiler (16) eine der Elektroden bildet.

9. Fotoreaktor nach einem der Ansprüche 1 bis 8, **dadurch gekennzeichnet, dass** der Strömungsverteiler (16) als Statikmischer ausgebildet ist.

## Claims

1. A photoreactor comprising radiation-permeable tubes (11) through which a reaction medium is adapted to flow and which are irradiated with light from outside, wherein the tubes (11) extend from an inlet chamber (12) provided with a fluid inlet (15),
**characterized in that**
said inlet chamber (12) comprises a flow distributor (16) distributing the reaction fluid from said fluid inlet (15) to said tubes (11), wherein the flow distributor (16) is a bulkhead provided with holes and the holes are arranged in an offset manner relative to the inlet ends of the tubes (11).

2. The photoreactor according to claim 1, **characterized in that** the tubes (11) are capillary tubes and have a wall thickness amounting to at least 10 % of the inner diameter.

3. The photoreactor according to claim 1 or 2, **characterized in that** the capillary tubes (11) define an elongate tube bundle (10) extending between an inlet chamber (12) and an outlet chamber (20).

4. The photoreactor according to one of claims 1 to 3, **characterized in that** the inner surfaces of the tubes (11) are provided with a photocatalytically active coating.

5. The photoreactor according to any one of claims 1 to 4, **characterized in that** in or between the tubes electrodes for generating electrical fields are provided, whereby the photochemical charge separation is supported.

6. The photoreactor according to any one of claims 1 to 5, **characterized in that** the inlet chamber (12) and/or the outlet chamber (20) comprise an electrode configured as an oxygen-reducing cathode, and another electrode configured as an anode.

7. The photoreactor according to any one of claims 1 to 6, **characterized in that** the inlet chamber (12) and/or an outlet chamber (20) comprise an electrode configured as a chloride-oxidizing anode, and another electrode configured as a cathode.

8. The photoreactor according to claim 6 or 7, **characterized in that** the flow distributor (16) defines one of the electrodes.

9. The photoreactor according to any one of claims 1 to 8, **characterized in that** the flow distributor (16) is configured as a static mixer.

## Revendications

1. Photoréacteur comprenant des tuyaux (11) perméables au rayonnement, qui sont aptes à être traversés par un médium de réaction et sont irradiés de l'extérieur avec de la lumière, lesdits tuyaux (11) partant d'une chambre d'admission (12) comprenant une entrée de fluide (15),
**caractérisé en ce que**
ladite chambre d'admission (12) comprend un distributeur de flux (16) distribuant le médium de réaction de ladite entrée de fluide (15) aux tuyaux (11), ledit distributeur de flux (16) étant un écran avec trous et les trous étant arrangés décalés par rapport aux extrémités d'entrée des tuyaux (11).

2. Photoréacteur selon la revendication 1, **caractérisé en ce que** lesdits tuyaux (11) sont des tuyaux capillaires et présentent une épaisseur de paroi qui est au moins 10% du diamètre intérieur.

3. Photoréacteur selon les revendications 1 ou 2, **caractérisé en ce que** les tuyaux capillaires (11) forment un faisceau de tuyaux (10) élongé s'étendant entre ladite chambre d'admission (12) et une chambre de sortie (20).

4. Photoréacteur selon l'une quelconque des revendications 1 à 3, **caractérisé en ce que** les tuyaux (11) sont munis à l'intérieur d'une couche active photocatalytiquement.

5. Photoréacteur selon l'une quelconque des revendications 1 à 4, **caractérisé en ce que** des électrodes sont prévues dans ou entre les tuyaux pour générer des champs électriques, ainsi supportant la séparation de charge - photochimique.

6. Photoréacteur selon l'une quelconque des revendications 1 à 5, **caractérisé en ce que** ladite chambre d'admission (12) et/ou une chambre de sortie (20) comprend une électrode comme cathode de réduction d'oxygène et une autre électrode comme anode.

7. Photoréacteur selon l'une quelconque des revendications 1 à 6, **caractérisé en ce que** ladite chambre d'admission (12) et/ou une chambre de sortie (20) comprend une électrode comme anode d'oxydation de chlorure et une autre électrode comme cathode.

8. Photoréacteur selon les revendications 6 ou 7, **caractérisé en ce que** le distributeur de flux (16) forme une des électrodes.

9. Photoréacteur selon l'une quelconque des revendications 1 à 8, **caractérisé en ce que** le distributeur de flux (16) est un mélangeur statique.
